# EUROPÄISCHE PATENTSCHRIFT

(11) **EP 3 846 974 B1**
(45) Veröffentlichungstag und Bekanntmachung des Hinweises auf die Patenterteilung: **21.08.2024**
(21) Anmeldenummer: 19762419.0
(22) Anmeldetag: 06.09.2019
(51) Int. Cl.: B25J 9/10, B25J 17/00, F16C 25/08, F16C 11/04, F16C 17/10

(54) **GELENKLAGERUNG FÜR EINEN ROBOTER MIT ELASTISCH KOMPRIMIERBAREM VORSPANNELEMENT**
HINGE BEARING FOR A ROBOT COMPRISING AN ELASTICALLY COMPRESSIBLE PRE-LOADING ELEMENT
STOCKAGE CONJOINT POUR UN ROBOT POURVU D'ÉLÉMENT DE PRÉCONTRAINTE ÉLASTIQUEMENT COMPRESSIBLE

(30) Priorität: 07.09.2018 EP 18193108
(43) Veröffentlichungstag der Anmeldung: 14.07.2021
(73) Patentinhaber: fruitcore robotics GmbH, 78467 Konstanz (DE)
(72) Erfinder: FÜSSL, Johannes, 78464 Konstanz (DE); FREY, Manuel Tobias, 78467 Konstanz (DE); RIEGGER, Jens Robert, 78462 Konstanz (DE)
(74) Vertreter: Grünecker Patent- und Rechtsanwälte PartG mbB
(86) Internationale Anmeldenummer: PCT/EP2019/073826
(87) Internationale Veröffentlichungsnummer: WO 2020/049152

(56) Entgegenhaltungen:
- WO-A1-2017/118953
- JP-A- H05 240 244
- JP-A- H09 136 286

## Beschreibung

Die vorliegende Erfindung betrifft einen Roboter mit einer ersten Viergelenkkette zum Antrieb wenigstens eines Roboterarms, wobei wenigstens eine Gelenklagerung dieser Viergelenkkette eine Welle, und ein auf der Welle zwischen zwei Axiallagern rotierbar gelagertes Gliedelement umfasst. Die Erfindung bezieht sich weiterhin auf ein Verfahren zur Montage eines solchen Roboters.

Das Dokument WO 2017/118953 A1 offenbart einen Roboter mit einer Viergelenkkette.

Im Stand der Technik sind verschiedene Kinematiken für den Aufbau von Robotern bekannt. So werden bei einer seriellen Kinematik die Antriebe in den jeweiligen Achsen des Roboters vorgesehen. Dies hat aber den Nachteil, dass die bewegte Masse durch das Gewicht dieser Antriebe erhöht wird.

Aus der CN 106 989 142 A ist ein Getriebe für einen Industrieroboter bekannt, wobei eine exzentrische Hülse zwischen einer Kompressionsfeder und einem Sicherungsring auf einer Welle befestigt ist.

Alternativ sind parallele Kinematiken für den Aufbau von Robotern bekannt, bei denen beispielsweise mehrere Antriebe in einem Sockel des Roboters vorgesehen sind, deren Antriebsbewegung über separat von den Roboterarmen vorgesehene Getriebe zu den jeweiligen Roboterarmen geleitet wird. Hier kommen beispielsweise Viergelenkketten zum Einsatz. Weiterhin sind auch hybride Kinematiken bekannt, bei denen beispielsweise eine serielle Grundkinematik mit einem Antrieb über eine parallele Kinematik kombiniert wird.

Allerdings erfordern hybride und parallele Kinematiken eine Vielzahl von Lagerstellen, nicht nur an den Achsen zwischen den Roboterarmen, sondern auch innerhalb der Antriebsketten. Dies gilt insbesondere, wenn der Roboter flexible Bewegungen in einem großen Arbeitsraum bereitstellen soll, da dann vorteilhafterweise eine feingliedrige parallele Kinematik vorgesehen wird.

Um die notwendige Präzision der Bewegung des Roboters zu ermöglichen, müssen die Lager genau positioniert und im Wesentlichen spielfrei sein.

Bei entsprechenden Robotern aus dem Stand der Technik werden Gliedelemente auf Wellen in radialer Richtung durch ein Radiallager und in Axialrichtung zwischen zwei Axiallagern gelagert, wobei die axiale Positionierung durch einen Anschlag erfolgt, und die axiale Vorspannung durch ein Klemmelement aufgebracht wird, das exakt in seiner Position eingestellt wird. Als Klemmelemente kommen Stellringe, Klemmringe oder Muttern zum Einsatz, also Elemente die präzise in ihrer axialen Anordnung auf der Welle eingestellt werden können. Allerdings erfordert die erstmalige Einstellung des Klemmelements und die nachfolgenden Einstellungen bei der Wartung einen beträchtlichen Arbeitsaufwand, da nicht nur die Lagervorspannung, sondern auch die Lagerposition sorgfältig eingestellt werden muss.

Die Erfindung hat deswegen die Aufgabe, einen Roboter mit einer Viergelenkkette mit wenigstens einer Gelenklagerung bereitzustellen, die den Erfordernissen bei parallelen und hybriden Kinematiken genügt, betriebssicher ist und dennoch wenig aufwendig in der Fertigung und Montage ist.

Die Erfindung stellt einen Roboter mit einer Viergelenkkette mit wenigstens einer Gelenklagerung bereit, die eine Welle und wenigstens ein auf der Welle zwischen zwei Axiallagern rotierbar gelagertes Gliedelement aufweist, wobei erfindungsgemäß ein elastisch komprimierbares Vorspannelement vorgesehen ist, das eine axiale Vorspannkraft auf die Axiallager aufbringt.

Der Roboter ist mit einer ersten Viergelenkkette zum Antrieb wenigstens eines Roboterarms, insbesondere eines Schwenkarms, Tragarms oder Greifarms, vorsehen, wobei die erste Viergelenkkette eine Kurbel, eine Koppel und eine Schwinge aufweist, wobei die Kurbel mit der Koppel und die Koppel mit der Schwinge jeweils über eine Gelenklagerung verbunden sind, und wobei wenigstens eine dieser Gelenklagerungen wie vorangehenden beschrieben ausgestaltet ist.

Der Einsatz der Gelenklagerung bei einem Roboter mit einem Antrieb über ein Getriebe in Form einer Viergelenkkette ist vorteilhaft, da die Viergelenkkette eine Vielzahl von Gliedelementen zur Ausbildung der Kurbel, Koppel und Schwinge vorsieht, deren Lagerung aber gewöhnlicherweise keinen hohen Axialkräften, sondern vornehmlich Radialkräften ausgesetzt sind.

Vorteilhafterweise ist das in der kinematischen Reihe erste Viergelenkkettenelement, also insbesondere die Kurbel, und/oder das in der kinematischen Reihe letzte Viergelenkkettenelement der gleichen Viergelenkkette und/oder einer nachfolgenden Viergelenkkette, also insbesondere eine Schwinge, in Axialrichtung unverschieblich, insbesondere starr, befestigt, insbesondere am Sockel oder an einem Roboterarm. So kann die Kurbel direkt auf einem Getriebe oder Motor, beispielsweise im Sockel, angeflanscht sein. Die Schwinge kann hingegen in einem der Roboterarme oder Robotergelenke axial unverschieblich gelagert sein. Damit wird durch die kinematisch ersten und letzten Viergelenkkettenelemente die axiale Position der inneren Gliedelemente der Viergelenkkette oder Viergelenkketten definiert.

Die Viergelenkkette weist Viergelenkkettenelemente in Form von Kurbel, Koppel und Schwinge auf, die drehgelenkig in dieser Reihenfolge miteinander verbunden sind. Ein Viergelenkkettenelement kann durch ein, zwei, drei, vier oder mehr Gliedelemente der Gelenklagerung gebildet werden, die vorteilhafterweise in Axialrichtung symmetrisch in der Gelenklagerung angeordnet sind. Insbesondere erstrecken sich die Gliedelemente, die gemeinsam ein Viergelenkkettenelement bilden, im Wesentlichen parallel.

Das elastisch komprimierbare Vorspannelement ermöglicht einen Spielausgleich und stellt eine betriebssichere Lagervorspannung bereit. Zudem ist die erfindungsgemäße Gelenklagerung ausreichend präzise, da die darauf wirkenden Kräfte vornehmlich in radialer Richtung gerichtet sind. Dennoch in Axialrichtung entstehende Kräfte können mit ausreichender Positionsgenauigkeit aufgenommen werden.

Die erfindungsgemäße Anordnung ermöglicht ein präzises Vorspannen, da durch die elastische Komprimierung des Vorspannelements eine definierte Vorspannkraft in axialer Richtung beaufschlagt wird. Weiterhin wird das Gliedelement durch das Vorspannelement ausgerichtet und Fertigungstoleranzen können ausgeglichen werden.

Die Axiallager sind insbesondere Axialwälzlager, Schrägwälzlager, Gleitlager mit einem Bund aus Kunststoff, Metall, Verbund- oder Sintermaterial, oder Anlaufscheiben aus Kunststoff, Metall, Verbund- oder Sintermaterial.

Die rotierbar gelagerten Gliedelemente sind jeweils über Radiallager auf der Welle gelagert. Dabei handelt es sich insbesondere um Radialwälzlager, Schrägwälzlager oder Gleitlagerbuchsen mit oder ohne Bund aus Kunststoff, Metall, Verbund- oder Sintermaterial. Die Gleitlagerbuchse für das Radiallager kann so ausgeführt sein, dass sie axial einseitig oder beidseitig über das Gliedelement übersteht, und somit einseitig oder beidseitig auch das Axiallager bereitstellt. Die Buchse bildet somit insbesondere eine Anlaufscheibe oder einen Lagerring des Axiallagers.

Insbesondere werden mehrere Komponenten axial verschieblich auf einer Welle zwischen unverstellbaren Anschlägen angeordnet. Bei den Komponenten handelt es sich um ein oder mehrere rotierbar gelagerte Gliedelemente, Distanzhülsen, Axiallager und/oder Vorspannelemente. Bei den Anschlägen kann es sich um fest mit der Welle verbundene Gliedelemente, Durchmesserveränderungen in der Welle und/oder um reine Fixierelemente wie Muttern und/oder Stellringe handeln.

Die Axiallager können direkt an dem rotierbar gelagerten Gliedelement angeordnet sein oder sind axial beanstandet dazu, wenn andere Komponenten zwischen dem Gliedelement und dem Axiallager vorgesehen sind, wie beispielsweise das Vorspannelement oder eine Distanzhülse.

In einer Ausführungsform sind an jedem axialen Ende der Welle in Axialrichtung unverstellbare Anschläge vorgesehen. Diese Anschläge definieren die Länge des Montagebereichs auf der Welle, in dem das wenigstens eine rotierbar gelagerte Gliedelement und die weiteren Komponenten angeordnet sind.

In einer Ausführungsform liegt wenigstens eines der Axiallager axial an einem der Anschläge, an einer Distanzhülse und/oder an dem Vorspannelement an. Somit ermöglicht das Axiallager eine Rotation des Gliedelements gegenüber diesen Komponenten.

Insbesondere kann eines der Axiallager mit einer Seite an dem Anschlag angeordnet sein, und mit der anderen Seite an einer Distanzhülse, an dem Vorspannelement, oder direkt an dem rotierbar gelagerten Gliedelement.

Insbesondere kann eines der Axiallager mit einer Seite an dem rotierbar gelagerten Gliedelement angeordnet sein, und mit der anderen Seite an einem anderen rotierbar gelagerten Gliedelement, an einer Distanzhülse oder an dem Vorspannelement.

Insbesondere kann eines der Axiallager mit einer Seite an einer Distanzhülse, mit der anderen Seite an einer anderen Distanzhülse oder an dem Vorspannelement angeordnet sein.

Das Vorspannelement kann mit einer Seite an dem Anschlag angeordnet sein, und mit der anderen Seite an einer Distanzhülse, an einem der Axiallager oder an dem rotierbar gelagerten Gliedelement.

Insbesondere kann das Vorspannelement mit einer Seite an dem rotierbar gelagerten Gliedelement angeordnet sein, und mit der anderen Seite an einem anderen rotierbar gelagerten Gliedelement, an einer Distanzhülse oder an einem der Axiallager. In einer Ausführungsform kann das Vorspannelement zwischen einem Paar von rotierbar gelagerten Gliedelementen angeordnet sein, die dann ein gemeinsam rotierendes Paar bilden.

Insbesondere kann das Vorspannelement mit einer Seite an einer Distanzhülse, mit der anderen Seite an einer anderen Distanzhülse oder an einem der Axiallager angeordnet sein.

Wenigstens einer der Anschläge kann durch ein starr oder rotierbar im axialen Endbereich an der Welle befestigtes, axial äußeres Gliedelement, einen Absatz in der Welle oder ein Fixierelement gebildet werden. Wenn das axial äußere Gliedelement den Anschlag bildet, kann auf separat vorgesehenen Fixierelemente verzichtet werden, was die Fertigung und Montage der Gelenklagerung vereinfacht.

Der Absatz kann durch eine mittels Drehbearbeitung gefertigte Durchmesserveränderung in der Welle bereitgestellt werden.

Das axial äußere Gliedelement kann mit der Stirnseite der Welle, beispielsweise durch Verschrauben, befestigt sein. Das äußere Gliedelement kann gegenüber der Welle rotierbar sein, alternativ und bevorzugt ist es aber starr mit der Welle verbunden. Die Fixierung des äußeren Gliedelements auf der Welle kann insbesondere durch ein Befestigungselement, beispielsweise in Form einer Schraube, einer Mutter, eines Spannelements mit Bajonettverschluss, oder einem sonstigen, insbesondere mit Gewinde ausgestatteten, Befestigungselement erfolgen.

Das Fixierelement ist insbesondere auf die Welle bis zu einer definierten Position aufschiebbar oder aufschraubbar, und kann somit in einer vorbestimmten Position auf der Welle befestigt werden. Das Fixierelement kann eine Mutter oder ein Klemmring sein.

Folglich wird durch die unverstellbaren Anschläge ein axialer Abstand vorgegeben, in dem die Axiallager und das wenigstens eine rotierbar gelagerte Gliedelement, das elastisch komprimierbare Vorspannelement, sowie gegebenenfalls Distanzhülsen und ggf. weitere Komponenten vorgesehen werden, wobei durch deren Axialerstreckung und die Elastizität des elastisch komprimierbaren Vorspannelements die Vorspannkraft der Lager und die Positionierung des rotierbar gelagerten Gliedelements definiert wird.

Insbesondere kann die Vorspannung mit nur einem elastisch komprimierbaren Vorspannelement bereitgestellt werden. In anderen Ausführungsform können aber auch mehrere elastisch komprimierbare Vorspannelemente vorgesehen werden.

In einer Ausführungsform ist das Vorspannelement eine Schraubendruckfeder, eine Tellerfeder, eine Fingerfeder, ein elastischer O-Ring, insbesondere ein Dichtring, ein Elastomerring, ein Sicherungsblech oder eine Federscheibe. Diese Bauteile erstrecken sich insbesondere in Umfangsrichtung um die Welle und ermöglichen somit eine im Wesentlichen gleichmäßige Vorspannkraft über die gesamte Umfangsrichtung, eine gleichförmige Lagervorspannkraft und präzise Positionierung. Zudem kann eine Kombination von mehreren dieser gleichen oder verschiedenen Bauteile als Vorspannelement vorgesehen werden, um die gewünschten elastischen Eigenschaften bereitzustellen. Auch kann das Bauteil für das Vorspannelement mehrteilig sein, beispielsweise aus zwei Hälften bestehen.

In einer Ausführungsform ist wenigstens eine Distanzhülse axial neben dem Vorspannelement auf der Welle angeordnet. Damit kann beispielsweise eine Distanzhaltung zwischen dem Vorspannelement und dem Axiallager ermöglicht werden.

Vorteilhafterweise sind mehrere rotierbar gelagerte Gliedelemente auf der Welle vorgesehen. Dabei können jeweils mehrere rotierbar gelagerte Gliedelemente zur gemeinsamen Rotation vorgesehen sein. Diese gemeinsam rotierbar gelagerten Gliedelemente können gemeinsam mit einer Distanzhülse eine integral rotierende Einheit bilden, innerhalb derer keine Axiallager vorgesehen werden müssen. Insbesondere können die mehreren rotierbar gelagerten Gliedelement jeweils in gemeinsam rotierenden Paaren von Gliedelementen vorgesehen sein.

Die Welle kann an wenigstens einem axialen Ende eine Stufe aufweisen, gegen die ein äußeres Gliedelement fixiert wird, sodass das äußere Gliedelement in einer vordefinierten, unverstellbaren axialen Position mit der Welle verbunden ist. Die Stufe bildet einen Anschlag für die Fixierung des äußeren Gliedelements. Die Fixierung erfolgt insbesondere durch Verschrauben des Gliedelements mit der Welle. Das äußere Gliedelement kann insbesondere nur gemeinsam mit der Welle rotieren, ist also starr mit dieser verbunden.

Die Welle kann entweder einteilig oder mehrteilig ausgeführt sein. Insbesondere kann die Welle eine Innenwelle, insbesondere in Form einer zylindrischen Vollwelle, aufweisen und eine auf die Innenwelle aufgeschobene Hohlwelle, wobei die vorgenannte Stufe durch die Stirnseite der Hohlwelle gebildet wird.

Insbesondere kann durch jede der jeweiligen Stirnseiten der Hohlwelle eine Stufe gegenüber der Innenwelle bereitgestellt werden. Somit wird durch Länge der die Hohlwelle der Abstand zwischen den äußeren Gliedelementen bestimmt. Die bezüglich der äußeren Hohlwelle rotierbar gelagerten Gliedelemente können innerhalb dieses Abstands auf der Hohlwelle angeordnet werden. Die äußeren Gliedelemente werden vorteilhafterweise durch ein Befestigungselement fest an die Stirnseite der Hohlwelle gepresst.

Vorteilhafterweise ist die Gelenklagerung in Axialrichtung symmetrisch. Insbesondere sind die rotierbar gelagerten Gliedelemente symmetrisch in Paaren bezüglich einer in Axialrichtung mittig angeordneten Symmetrieebene angeordnet.

In einer vorteilhaften Ausführungsform weist die Welle zwischen zwei axial äußeren Gliedelementen einen gleichbleibenden Durchmesser auf. Dies ermöglicht, dass das wenigstens eine innere rotierbar gelagerte Gliedelement und das elastisch komprimierbare Vorspannelement auf die Welle aufgeschoben werden können, und in Abhängigkeit von ihren axialen Längen positioniert werden. Weiterhin wird dadurch eine konstante axiale Vorspannkraft entlang aller Elemente zwischen den axial äußeren Gliedelementen ermöglicht.

Insbesondere sind ein, zwei, drei oder mehr Paare von rotierbar gelagerten Gliedelementen auf der Welle angeordnet, wobei alle rotierbaren Gliedelemente mit der gleichen axialen Vorspannkraft beaufschlagt werden, die durch das elastische Vorspannelement vorgegeben wird.

Vorteilhafterweise ist zwischen den unabhängig voneinander rotierbar gelagerten Gliedelementen jeweils ein Axiallager vorgesehen, um eine einfache relative Rotation dieser Gliedelemente zu ermöglichen.

Auf der Welle werden die folgenden Komponenten in je nach Einsatzzweck vorteilhafter Reihung zwischen den unverstellbaren Anschlägen angeordnet: wenigstens zwei Axiallager, wenigstens ein rotierbar gelagertes Gliedelement, optional wenigstens eine Distanzhülse, und wenigstens ein elastisch komprimierbares Vorspannelement. Zwischen diesen Elementen können Materialpaarungen in beliebiger Kombination, insbesondere aus den folgenden Materialien eingesetzt werden: Stahl, Sinterbronze, Kunststoff und Aluminium. Vorteilhafterweise erfolgt eine Anordnung der Komponenten in symmetrischer Weise bezüglich der Axialrichtung.

Auf der Welle können ein oder mehrere Vorspannelemente, optional in Kombination mit einer oder mehreren, Distanzhülsen angeordnet werden. Zudem können eine Vielzahl von Gelenklagerstellen mit rotierbar gelagerten Gliedelementen auf der Welle bereitgestellt werden. Zwischen den rotierbar gelagerten Gliedelementen wird vorteilhafterweise jeweils ein Axiallager vorgesehen, außer zwischen den axial innersten Gliedelementen. Diese bewegen sich dann zusammen als ein gemeinsam drehendes Element.

Durch die erfindungsgemäße Ausführungsform werden alle Gelenklagerstellen jeweils gleichmäßig vorgespannt und axial ausgerichtet.

In anderen Ausführungsformen der Erfindung können auch Stufen oder axiale Anschläge auf der Welle vorgesehen werden, sodass in verschiedenen axialen Bereichen der Welle verschiedene axiale Vorspannkräfte und eine bereichsweise gesonderte Positionierung bzw. Ausrichtung von wenigstens einem oder vorteilhafterweise mehreren rotierbar gelagerten Gliedelementen möglich ist.

Die Vorspannelemente können symmetrisch oder es kann nur ein Vorspannelement einseitig auf die Welle aufgebracht werden.

Die Distanzhülsen können aus geeigneten Kunststoffen oder Metallen mit guten Gleiteigenschaften, wie beispielsweise Bronze, ausgeführt werden, sodass sie zusätzlich die Funktion des Axiallagers in Form einer Anlaufscheibe übernehmen.

Vorteilhafterweise werden zwischen der Welle und den rotierbar gelagerten Gliedelementen Radiallager vorgesehen. Insbesondere werden innerhalb der rotierbar gelagerten Gliedelemente Radiallager vorgesehen.

Insbesondere ist die Welle als einfache Welle ohne Absätze ausgestaltet, und die axial äußeren Gliedelemente oder alternativ vorgesehene Fixierelemente sind auf der Stirnseite der Welle befestigt.

Die erfindungsgemäße Gelenklagerung ist kompakt und robust, weist ein geringes Gewicht auf, und ist selbstzentrierend, wobei Kräfte ohne Einstellung der Vorspannkraft oder axialen Position ideal aufgenommen und abgeführt werden. Zudem werden Fertigungstoleranzen ausgeglichen, und es wird eine spielarme und betriebssichere Lagerung erreicht. Zudem weist die Gelenklagerung eine hohe Steifigkeit auf.

Insbesondere wird eine Komprimierung des Vorspannelements in Axialrichtung zwischen 0,1 mm (Millimetern) und 2 mm vorgesehen, vorteilhafterweise zwischen 0,2 mm und 1,3 mm. Dabei wird eine Vorspannkraft von zwischen 30 N (Newton) und 800 N erzeugt, vorteilhafterweise von 80 N bis 420 N. In einer Ausführungsform wird eine Vorspannkraft von ungefähr 180 N bis 220 N erzeugt. In einer anderen Ausführungsformen wird eine Vorspannkraft von ungefähr 30 N bis 50 N erzeugt. Eine derartige Vorspannkraft kann beispielsweise durch den Einsatz einer Fingerfederscheibe als Vorspannelement erreicht werden.

Bei dem Einsatz von Tellerfedern im Vorspannelement können diese in Reihe, d.h. gleichmäßig in gleicher Orientierung angeordnet werden, sodass bei gleicher Komprimierung die doppelte axiale Vorspannkraft erreicht wird, oder parallel, d.h. in einer alternierenden Anordnung, sodass sich bei gleichem Kompressionsweg die axiale Vorspannkraft halbiert. Die Tellerfedern haben insbesondere eine Federkonstante von 500 N/mm bis 2500 N/mm, vorteilhafterweise von 1500 N/mm bis 2000 N/mm, bei axialer Komprimierung.

Vorteilhafterweise weist der Roboter zusätzlich zur ersten Viergelenkkette eine zweite Viergelenkkette auf, deren Kurbel der Schwinge der ersten Viergelenkkette entspricht, wobei die Verbindung zwischen der Koppel der ersten Viergelenkkette, der Kurbel der zweiten Viergelenckette und der Koppel der zweiten Viergelenkkette in Form der erfindungsgemäßen Gelenklagerung ausgestaltet ist. Der Einsatz der erfindungsgemäßen Gelenklagerung bei solchen in Reihe geschalteten Viergelenkketten ist insbesondere vorteilhaft, da hier eine Vielzahl von relativ zueinander rotierbaren Komponenten auf nur einer Welle angeordnet werden.

In einer Ausführungsform wird die Kurbel, Koppel oder Schwinge der ersten oder zweiten Viergelenkkette durch wenigstens ein rotierbar gelagertes Gliedelement der Gelenklagerung gebildet. Vorteilhafterweise wird die Kurbel, Koppel oder Schwinge der ersten oder zweiten Viergelenkkette jeweils durch ein Paar von Gliedelementen der Gelenklagerung gebildet, die gemeinsam rotiert werden.

Ein erfindungsgemäßes Verfahren zur Montage des zuvor beschriebenen Roboters umfasst das Bereitstellen einer Welle, das Aufschieben von Axiallagern, wenigstens eines rotierbar gelagerten Gliedelements der Viergelenkkette und eines elastisch komprimierbaren Vorspannelements auf die Welle, und das Befestigen eines axialen Anschlags auf der Welle, sodass der axiale Bereich in dem die Axiallager, das rotierbar gelagerte Gliedelement und das elastisch komprimierbare Vorspannelement frei verschieblich vorgesehen sind, auf eine vorbestimmte, unverstellbare Länge begrenzt wird.

Dieses Verfahren ermöglicht eine zügige und dennoch betriebssichere Montage der Gelenklagerung, auch wenn eine Vielzahl von zueinander rotierbar gelagerten Gliedelementen auf der Welle vorgesehen werden.

Das erfindungsgemäße Verfahren ermöglicht eine Reduzierung der Montagezeit. Bei der Montage werden alle Bauteile in vorbestimmter Reihenfolge auf die Welle aufgeschoben und zwischen Anschlägen befestigt, von denen wenigstens einer durch ein Fixierelement oder durch ein axial äußeres Gliedelement bereitgestellt wird. Da die Position des Anschlags definiert ist, ist kein weiteres Ausrichten mehr notwendig, und sowohl die Position der Komponenten als auch die axiale Vorspannkraft ist ideal eingestellt.

Die Erfindung wird nun weitergehend anhand von beispielhaften Ausführungsbeispielen erläutert, die in den folgenden Figuren dargestellt sind:
Figur 1 zeigt eine perspektivische Ansicht eines Roboters, in dem wenigstens eine erfindungsgemäße Ausführungsform der Gelenklagerung zum Einsatz kommt.
Figur 2 zeigt eine Schnittansicht einer ersten Ausführungsform einer erfindungsgemä-ßen Gelenklagerung.
Figur 3 zeigt eine Schnittansicht einer zweiten Ausführungsform einer erfindungsgemäßen Gelenklagerung.
Figur 4 zeigt eine Schnittansicht einer dritten Ausführungsform einer erfindungsgemä-ßen Gelenklagerung.
Figur 5 zeigt eine Schnittansicht einer vierten Ausführungsform einer erfindungsgemä-ßen Gelenklagerung.

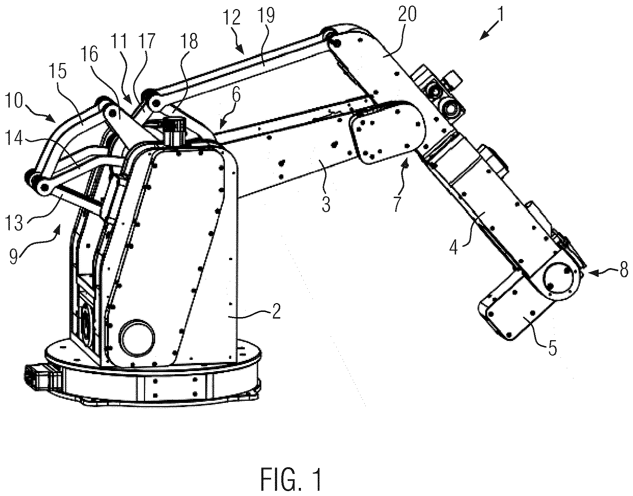

Der in Fig. 1 dargestellte Roboter 1 weist einen um die Vertikalachse drehbaren Sockel 2, einen Schwenkarm 3, einen Tragarm 4 und einen Gelenkarm 5 auf. Die vorgenannten Arme 3, 4, 5 sind gemäß einer seriellen Kinematik in Reihe angeordnet.

Bei dem dargestellten Roboter 1 handelt es sich um einen 5-Achs-Roboter oder einen 6-Achs-Roboter. Die Vertikalachse für die Drehung des Sockels 2 stellt eine erste Achse des Roboters 1 dar. Zwischen dem Sockel 2 und dem Schwenkarm 3 ist ein erstes Gelenk 6 vorgesehen, das eine zweite Achse des Roboters 1 definiert. Zwischen den Schwenkarm 3 und dem Tragarm 4 ein zweites Gelenk 7 vorgesehen, das eine dritte Achse des Roboters 1 definiert. Zwischen dem Tragarm 4 und dem Gelenkarm 5 ist ein drittes Gelenk 8 vorgesehen vorgesehen, das eine vierte Achse des Roboters 1 definiert. Der Tragarm 4 kann mit einem weiteren Gelenk in sich verdrehbar sein, sodass hier eine weitere Achse des Roboters 1 bereitgestellt wird. Ein nicht dargestellter Greifer oder ein anderes Arbeitselement kann gegenüber dem Gelenkarm 5 um eine fünfte oder sechste Achse des Roboters 1 verdreht werden.

Die Gelenke 6, 7 ermöglichen ein Verschwenken des Schwenkarms 3 und Tragarms 4 um die jeweilige, im Wesentlichen horizontalen zweite und dritte Achse des Roboters. Der Antriebsmotor des dritten Gelenks 8 ist direkt oder über ein Getriebe an diesem vorgesehen, wie bei einer rein seriellen Kinematik. Bei dem Getriebe kann es sich um einen Antriebsriemen handeln.

Die Antriebsbewegungen für das erste Gelenk 6 und das zweite Gelenk 7 werden jeweils über Viergelenkketten 9, 10, 11 und 12 übertragen.

Dabei sind die erste Viergelenkkette 9 und die zweite Viergelenkkette 10 in Reihe angeordnet, um eine Antriebsbewegung auf den Schwenkarm 3 zu übertragen, sodass dieser gegenüber dem Sockel 2 verschwenkt werden kann. Die erste Viergelenkkette 9 weist eine in Fig. 1 im Sockel 2 verborgene erste Kurbel auf, die mittels eines ersten Antriebsmotors verschwenkt werden kann, und mit der Koppel 13 gelenkig verbunden ist, und entsprechend die Koppel 13 der ersten Viergelenkkette 9 antreibt. Die Koppel 13 ist gelenkig mit der Schwinge 14 der ersten Viergelenkkette 9 verbunden und treibt diese an. Die Schwinge 14 bildet gleichzeitig die Kurbel der zweiten Viergelenkkette 10, und ist mit der Koppel 15 der zweiten Viergelenkkette 10 gelenkig verbunden und treibt diese an. Die Schwinge 16 der zweiten Viergelenkkette 10 ist starr mit dem Schwenkarm 3 verbunden, und rotiert mit diesem bei dessen Schwenkbewegung. Die Schwinge 16 und der Schwenkarm 3 können einteilig ausgebildet sein. Insbesondere bilden die Schwinge 16 und der Schwenkarm 3 eine Wippe bezüglich des Gelenks 6. Die Kurbel der erste Viergelenkkette 9 kann in Axialrichtung unverschieblich an einem Motor oder Getriebe im Sockel 2 angeflanscht sein. Bei dem Getriebe kann es sich auch um einen Antriebsriemen oder Ähnliches handeln. Die Schwinge 14 kann ebenfalls axial unverschieblich im Sockel 2 gelagert sein. Schließlich kann auch die Lagerung der Schwinge 16 im Gelenk 6 in Axialrichtung unverschieblich sein.

Die Antriebsbewegung für das Verschwenken des Tragarms 4 gegenüber dem Schwenkarm 3 wird durch die dritte Viergelenkkette 11 und die vierte Viergelenkkette 12 von einem zweiten Antriebsmotor im Sockel 2 auf den Tragarm 4 übertragen. Durch den zweiten Antriebsmotor wird eine innerhalb des Sockels 2 angeordnete und somit nicht in Fig. 1 erkennbare Kurbel der dritten Viergelenkkette 11 verschwenkt, die mit der Koppel 17 der dritten Viergelenkkette 11 gelenkig verbunden ist und diese antreibt. Die Koppel 17 ist mit der Schwinge 18 der dritten Viergelenkkette 11 gelenkig verbunden und treibt diese an. Die Schwinge 18 ist gleichzeitig die Kurbel der vierten Viergelenkkette 12, die mit der Koppel 19 der vierten Viergelenkkette gelenkig verbunden ist und diese antreibt. Die Schwinge 20 und der Tragarm 4 sind starr in Form einer Wippe bezüglich des zweiten Gelenks 7 verbunden. Die Schwinge 20 der vierten Viergelenkkette 12 ist insbesondere einteilig mit dem Tragarm 4 ausgebildet. Die Kurbel der dritten Viergelenkkette 11 kann in Axialrichtung unverschieblich an einem Motor oder Getriebe im Sockel 2 angeflanscht sein. Bei dem Getriebe kann es sich auch um einen Antriebsriemen oder Ähnliches handeln. Die Schwinge 18 kann axial unverschieblich im Schwenkarm 3 gelagert sein. Schließlich kann auch die Lagerung der Schwinge 20 im Gelenk 7 in Axialrichtung unverschieblich sein.

Die Gelenklagerungen zwischen den Viergelenkkettenelementen in Form der Kurbeln, Schwingen und Koppeln der vorbeschriebenen Viergelenkketten 9, 10, 11, 12 können teilweise oder insgesamt durch erfindungsgemäße Gelenklagerungen realisiert werden.

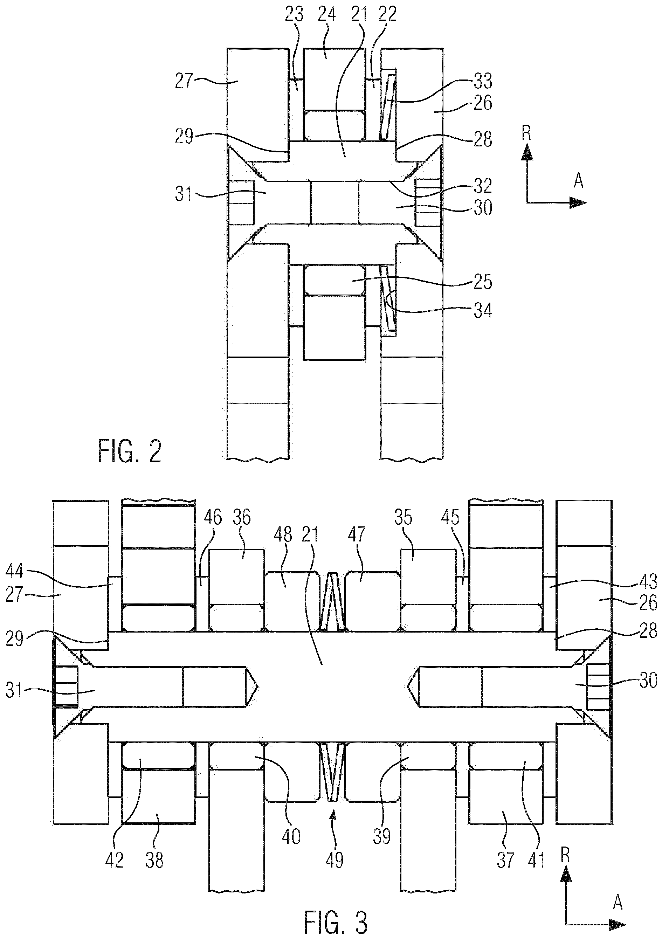

In einer Ausführungsform der Erfindung wird für eine Verbindung zwischen Viergelenkkettenelementen des Roboters 1 eine Gelenklagerung wie in Fig. 2 eingesetzt.

In Fig. 2 ist eine sich in Axialrichtung A erstreckende Welle 21 vorgesehen, auf der zwischen Axiallagern 22, 23 ein Gliedelement 24 rotierbar auf einem Radiallager 25 angeordnet ist. Axial äußere Gliedelemente 26, 27 sind starr mit den jeweiligen axialen Endseiten der Welle 21 verbunden, und dabei insbesondere jeweils an einer Stufe 28, 29 am axialen Ende der Welle 21 angeordnet. Die axial äußeren Gliedelemente 26, 27 werden jeweils durch eine Schraube 30, 31 auf die axiale Endfläche der Stufe 28, 29 gepresst, und somit in axialer Richtung präzise festgelegt. Die Schrauben 30, 31 werden in ein zentrales Innengewinde 32 in der Welle 21 eingedreht. Insbesondere können die axial äußeren Gliedelemente 26, 27 eine Fase oder eine Vertiefung aufweisen, um die Schrauben 30, 31 bündig aufzunehmen. Die Innenseiten der axial äußeren Gliedelemente 26, 27 bilden die jeweiligen axialen Anschläge für die auf der Welle angeordneten Komponenten.

Das rotierbar gelagerte Gliedelement 24 und die axial äußeren Gliedelemente 26, 27 erstrecken sich jeweils im Wesentlichen in einer Radialrichtung R von der Welle 21 weg.

Um eine axiale Vorspannkraft für die Axiallager 22, 23 aufzubringen und Fertigungstoleranzen in Axialrichtung A auszugleichen ist ein elastisch komprimierbares Vorspannelement 33 in Form einer Tellerfeder oder Fingerfederscheibe vorgesehen, das zwischen dem axial äußeren Gliedelement 26 und dem Axiallager 22 vorgesehen ist. Insbesondere ist das Vorspannelement 33 in einem zurückgesetzten Bereich 34 des axial äußeren Gliedelements 26 vorgesehen. Optional können das Vorspannelement 33 und die daran angrenzende Lagerhälfte des Axiallagers 22 oder das Axiallager 22 selbst, wenn dieses durch eine Anlaufscheibe gebildet wird, durch Formschluss bzw. eine Arretierung, zum Beispiel in Form eines Stifts, gegen ein Rotieren in Bezug auf das Gliedelement 26 gesichert werden. Damit kann sichergestellt werden, dass die Bewegung nur an der gewollten Stelle, beispielsweise zwischen dem Axiallager 22 und dem Gliedelement 24, stattfindet.

Eine Ausführungsform eines erfindungsgemäßen Verfahren zur Montage des Roboters gemäß Fig. 1 mit der Gelenklagerung gemäß Fig. 2 kann wie folgt durchgeführt werden: Zunächst wird die Welle 21 bis zur Stufe 28 in die Öffnung im axial äußeren Gliedelement 26 eingeschoben, und das axial äußere Gliedelement 26 wird mit der Schraube 30 an der Welle starr befestigt. Dann wird das Vorspannelement 33, das Axiallager 22, das Gliedelement 24 mit dem Radiallager 25 und das Axiallager 23 auf die Welle 21 aufgeschoben. Schließlich wird das axial äußere Gliedelement 27 bis zur Stufe 29 auf die Welle 21 aufgeschoben und mit der Schraube 31 starr auf der Welle 21 befestigt. Bestimmt durch die Stufen 28, 29 liegt ein definierter Abstand zwischen den Anschlägen in Form der axial äußeren Gliedelemente 26, 27 vor, der somit - in Abhängigkeit der axialen Länge der vorgenannten Komponenten auf der Welle 21 und der Elastizität des Vorspannelements 33 - die axiale Vorspannkraft auf der Welle 21 bestimmt.

In Fig. 3 ist eine zweite Ausführungsform einer erfindungsgemäßen Gelenklagerung dargestellt. In dieser Ausführungsform sind zwei Paare von Gliedelementen 35, 36, 37,38 mittels Radiallagern 39, 40, 41, 42 rotierbar auf der Welle 21 angeordnet. Dabei ist vorgesehen, dass jeweils zwei der rotierbar gelagerten Gliedelemente 35, 36, 37, 38 ein Viergelenkkettenelement bilden, beispielsweise eine Kurbel, Koppel oder Schwinge. Insbesondere bildet das Paar aus Gliedelementen 35, 36 ein Viergelenkkettenelement, und das Paar aus Gliedelementen 37, 38 ein weiteres Viergelenkkettenelement. Weiterhin sind wiederum axial äußere Gliedelemente 26, 27 fest durch Verschrauben auf der Welle 21 befestigt. Das Paar von axial äußeren Gliedelementen 26, 27 bildet ebenfalls ein Viergelenkkettenelement.

Zwischen dem axial äußeren, starr mit der Welle verbundenen Gliedelement 26, 27 und dem axial äußeren, rotierbar gelagerten Gliedelement 37, 38 ist ein Axiallager 43, 44 angeordnet. Weiterhin ist zwischen den axial äußeren, rotierbar gelagerten Gliedelement 37, 38 und dem radial inneren, rotierbar gelagerten Gliedelement 35, 36 ein Axiallager 45, 46 vorgesehen. Axial innerhalb des axial inneren, rotierbar gelagerten Gliedelements 35, 36 ist eine Distanzhülse 47, 48 vorgesehen. Zentral zwischen den Distanzhülsen 47, 48 ist ein elastisch komprimierbares Vorspannelement 49 vorgesehen. Das Vorspannelement 49 besteht insbesondere aus zwei gegensätzlich orientierten Tellerfedern.

Durch die axiale Länge der jeweiligen Komponenten auf der Welle 21, sowie die axiale Länge der Welle 21 zwischen den durch die Stufen 28, 29 in ihren Positionen bestimmten Anschlägen in Form der axial äußeren Gliedelemente 26, 27 wird somit der Kompressionsgrad des Vorspannelements 49 bestimmt, und damit in Abhängigkeit von dessen Elastizität die axiale Vorspannkraft der Axiallager 43, 44, 45, 46.

Die Radiallager 39, 40, 41, 42 können insbesondere als Gleitlager ausgeführt sein. Die Axiallager 43, 44, 45, 46 können insbesondere als Anlaufscheiben ausgeführt sein.

Das Vorspannelement 49, die Distanzhülsen 47, 48 und die axial inneren Gliedelemente 35, 36 bilden einen Block aus gemeinsam rotierenden Komponenten.

Die Gelenklagerung gemäß Fig. 3 kann beispielsweise in der Gelenklagerung des Roboters 1 aus Fig. 1 zwischen der Koppel 17, der Schwinge 18 und der Koppel 19 zum Einsatz kommen. Beispielsweise wird die Koppel 17 durch die axial inneren, rotierbar gelagerten Gliedelemente 35, 36 gebildet, die Schwinge 18 durch die rotierbar gelagerten Gliedelemente 37, 38 und die Koppel 19 durch die axial äußeren Gliedelemente 26, 27.

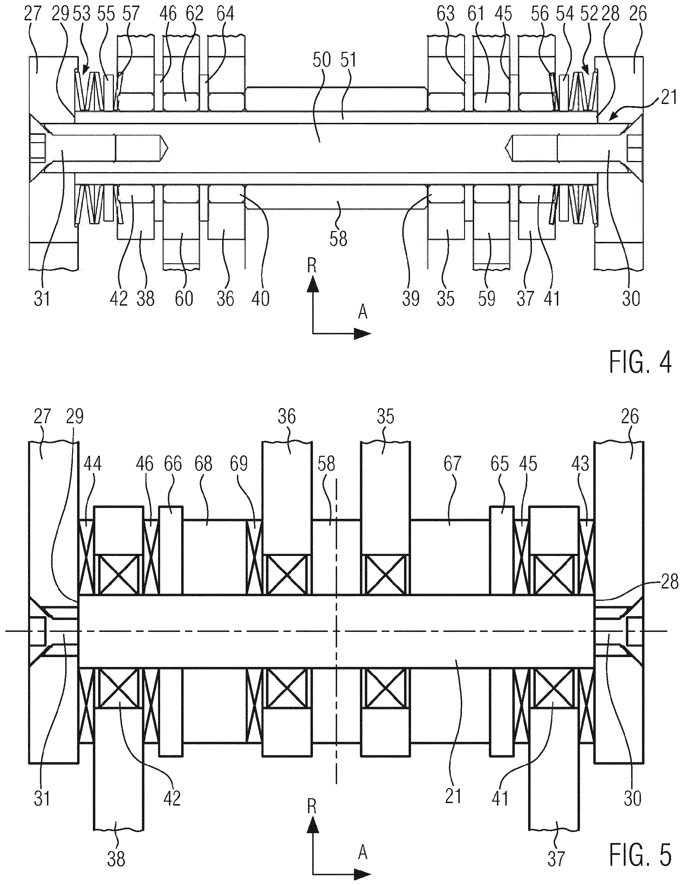

In Fig. 4 wird eine dritte Ausführungsform einer erfindungsgemäßen Gelenklagerung dargestellt. In dieser Ausführungsform wird die Welle 21 durch eine Innenwelle 50 und eine auf die Innenwelle 50 aufgeschobene Hohlwelle 51 gebildet. Nachdem die Hohlwelle 51 kürzer ausgeführt ist als die Innenwelle 50, werden die Stufen 28, 29 durch die Stirnseiten der Hohlwelle 51 gebildet. Die Stufen 28, 29 bilden eine Anlagefläche für die axial äußeren Gliedelemente 26, 27. In dieser Ausführungsform sind Vorspannelemente 52, 53 direkt zwischen den axial äußeren, starr mit der Welle 21 verbundenen Gliedelementen 26, 27 und einem Axiallager 54, 55 angeordnet. Axial innerhalb des Axiallagers 54, 55 kann ein weiteres Vorspannelement 56, 57 angeordnet sein. Die Vorspannelemente 52, 53 werden durch drei axial in alternierenden Orientierungen angeordnete Tellerfedern gebildet. Die Vorspannelemente 56, 57 werden jeweils durch eine einzelne Tellerfeder gebildet. Allerdings sind je nach Anwendungsfall verschiedene Kombinationen möglich, insbesondere kann die Anzahl der Tellerfedern pro Vorspannelement variiert werden. Weiterhin können entweder die Vorspannelemente 52, 53 oder die Vorspannelemente 56, 57 weggelassen werden. Wenn Anlaufscheiben als Axiallager 54, 55 eingesetzt werden, können - um die Reibstelle an den Anlaufscheiben zu entlasten - zusätzlich Reibscheiben, die die Reibfläche der Vorspannelemente 52, 53 und ggf. 56, 57 vergrößern, zum Einsatz kommen. Diese können fix mit den Vorspannelementen verbunden werden.

Axial innerhalb des Axiallagers 54, 55 bzw. des Vorspannelements 56, 57 ist ein axial äußeres, mittels einem Radiallager 41, 42 rotierbar gelagertes Gliedelement 37, 38 auf der Welle 21 vorgesehen. Weiterhin ist ein axial inneres, rotierbar gelagertes Gliedelement 35, 36 auf der Welle 21 vorgesehen, und zwar direkt angrenzend an eine mittig angeordnete Distanzhülse 58. In dieser Ausführungsform ist zusätzlich ein mittleres, rotierbar gelagertes Gliedelement 59, 60 über Radiallager 61, 62 auf der Welle 21 gelagert. Zwischen dem axial äußeren, rotierbar gelagerten Gliedelement 37, 38 und dem mittleren, rotierbar gelagerten Gliedelement 59, 60 ist ein Axiallager 45, 46 angeordnet. Zwischen dem axial inneren, rotierbar gelagerten Gliedelement 35, 36 und dem mittleren, rotierbar gelagerten Gliedelement 59, 60 ist ein Axiallager 63, 64 angeordnet.

Das Verfahren zur Montage des Roboters gemäß Fig. 1 mit der in Fig. 4 dargestellten Gelenklagerung kann wie folgt durchgeführt werden: Zunächst wird die Innenwelle 50 mittels der Schraube 30 an dem axial äußeren Gliedelement 26 befestigt. Dann wird die Hohlwelle 51 auf die Innenwelle 50 aufgesteckt, und bis zum Anschlag am axial äußeren Gliedelement 26 geschoben. Dann werden die auf der Hohlwelle 51 anzuordnenden Komponenten der Reihe nach auf die Hohlwelle 51 aufgesteckt, und schließlich das axial äußere Gliedelemente 27 mittels der Schraube 31 an der Innenwelle 50 befestigt, sodass es an die Stirnseite der Hohlwelle 51 gedrückt wird. In Abhängigkeit der Länge der Hohlwelle 51, sowie der darauf angeordneten Komponenten und der Elastizität der Vorspannelemente 52, 53, 56, 57 wird somit die axiale Vorspannkraft bestimmt. Die Vorspannelemente 52, 53, 56, 57 sind als Tellerfedern oder Pakete von Tellerfedern gestaltet. Das Axiallager 54, 55 zwischen den Vorspannelementen 52, 56; 53, 57 kann insbesondere eine Anlaufscheibe sein. Die Distanzhülse 58 und die axial inneren Gliedelemente 35, 36 können als integrale Einheit gemeinsam auf der Welle 21 verdreht werden.

Die Gelenklagerung gemäß Fig. 4 kann beispielsweise zwischen der Koppel 13, der Schwinge 14 und der Koppel 15 in Fig. 1 eingesetzt werden. Dabei bilden die Gliedelemente 35, 36, 37, 38 die Koppel 13, die Gliedelemente 59, 60 die Koppel 15, und die axial äußeren Gliedelemente 26, 27 die Schwinge 14. Hier wird also das Viergelenkkettenelement in Form der Koppel 13 durch vier Gliedelemente gebildet, und die Viergelenkkettenelemente in Form der Schwinge 14 und der Koppel 15 durch zwei Gliedelemente.

In Fig. 5 wird eine weitere Ausführungsform einer erfindungsgemäßen Gelenklagerung gezeigt. Hier sind elastische Vorspannelemente 65, 66 jeweils axial innerhalb eines Axiallagers 45, 46 angeordnet, das an dem radial äußeren, rotierbar gelagerten Gliedelement 37, 38 anliegt. Das Vorspannelement 65, 66 kann in dieser oder in anderen Ausführungsformen als Elastomerring ausgebildet sein. Axial innerhalb des Vorspannelements 65, 66 ist eine Distanzhülse 67, 68 angeordnet. Axial innerhalb der Distanzhülse 67, 68 ist ein axial inneres, rotierbar gelagertes Gliedelement 35, 36 vorgesehen. Die Gliedelemente 35, 36 können im Block mit einer inneren Distanzhülse 58 rotieren.

Es ist optional möglich, dass ein Axiallager 69 zwischen einer der Distanzhülsen 68 und dem angrenzenden Gliedelement 36 vorgesehen ist. In dieser und anderen Ausführungsformen können die Axiallager und/oder Radiallager als Wälzlager gestaltet sein.

Wie aus der vorangehenden Ausführungsform erkannt werden kann, ermöglicht die erfindungsgemäße Gelenklagerung eine kompakte Bauweise, eine einfache Montage der Gelenklager, ohne aufwändiges Ausrichten der einzelnen Gliedelemente, ein einfaches Einstellen der Lagervorspannung, eine Selbstausrichtung der Komponenten, insbesondere der rotierbar gelagerten Gliedelemente auf der Welle, eine hohe Steifigkeit des Systems in Radialrichtung und eine ausreichende Steifigkeit in Axialrichtung. Weiterhin kann die Gelenklagerung wartungsfrei gestaltet werden, und eine konstante Lagervorspannung wird über die gesamte Lebensdauer aufrechterhalten.

Mit der erfindungsgemäßen Gelenklagerung wird zumindest ein sehr geringes Lagerspiel in Radialrichtung und kein Lagerspiel in Axialrichtung erreicht. Soll auch das Radialspiel vermieden werden, kann beispielsweise ein Schrägwälzlager für die Lagerung des rotierbar gelagerten Gliedelements vorgesehen werden.

Bei den symmetrischen und im Wesentlichen symmetrischen Ausführungsformen gemäß Fig. 2 bis 5 können die Gliedelemente auf der Welle durch Kräfteausgleich symmetrisch ausgerichtet werden.

## Patentansprüche

1. Roboter mit einer ersten Viergelenkkette (9, 11) zum Antrieb wenigstens eines Roboterarms (3, 4), wobei die erste Viergelenkkette (9, 11) eine Kurbel, eine Koppel (13, 17) und eine Schwinge (14, 18) aufweist, wobei die Kurbel mit der Koppel (13, 17) und die Koppel (13, 17) mit der Schwinge (14, 18) jeweils über eine Gelenklagerung verbunden sind, wobei wenigstens eine dieser Gelenklagerungen umfasst:
eine Welle (21), und
wenigstens ein auf der Welle (21) zwischen zwei Axiallagern (22, 23, 43, 44, 45, 46, 54, 55, 63, 64, 69) rotierbar gelagertes Gliedelement (24, 35, 36, 37, 38, 59, 60),
wobei ein elastisch komprimierbares Vorspannelement (33, 49, 52, 53, 56, 57, 65, 66) vorgesehen ist, das eine axiale Vorspannkraft auf die Axiallager aufbringt.

2. Roboter nach Anspruch 1, wobei an jedem axialen Ende der Welle (21) in Axialrichtung unverstellbare Anschläge vorgesehen sind,

3. Roboter nach Anspruch 2, wobei wenigstens eines der Axiallager (22, 23, 43, 44, 45, 46, 54, 55, 63, 64, 69) axial an einem der Anschläge, an einer Distanzhülse (47, 48, 58, 67, 68) und/oder an dem Vorspannelement (33, 49, 52, 53, 56, 57, 65, 66) anliegt.

4. Roboter nach Anspruch 2 oder 3, wobei wenigstens einer der Anschläge durch ein an der Welle befestigtes axial äußeres Gliedelement (26, 27) oder einen Absatz in der Welle (21) gebildet wird.

5. Roboter nach einem der vorangehenden Ansprüchen, wobei das Vorspannelement (33, 49, 52, 53, 56, 57, 65, 66) eine Schraubendruckfeder, Tellerfeder, Fingerfederscheibe, ein elastischer O-Ring, insbesondere ein Dichtring, ein Elastomerring, ein Sicherungsblech oder eine Federscheibe ist.

6. Roboter nach einem der vorangehenden Ansprüchen, wobei wenigstens eine Distanzhülse (47, 48, 58, 67, 68) axial neben dem Vorspannelement (33, 49, 52, 53, 56, 57, 65, 66) auf der Welle (21) angeordnet ist.

7. Roboter nach einem der vorangehenden Ansprüchen, wobei mehrere rotierbar gelagerte Gliedelemente (35, 36, 37, 38, 59, 60) auf der Welle (21) vorgesehen sind.

8. Roboter nach einem der vorangehenden Ansprüchen, wobei die Welle (21) an wenigstens einem axialen Ende eine Stufe (28, 29) aufweist, gegen die ein äußeres Gliedelement (26, 27) fixiert wird, sodass das axial äußere Gliedelement (26, 27) in einer vordefinierten, unverstellbaren axialen Position mit der Welle (21) verbunden ist.

9. Roboter nach Anspruch 8, wobei die Welle (21) eine Innenwelle (50) und eine auf die Innenwelle (50) aufgeschobene Hohlwelle (51) umfasst, wobei die Stufe (28, 29) durch die Stirnseite der Hohlwelle (51) gebildet wird.

10. Roboter nach einem der vorangehenden Ansprüchen, wobei die Gelenklagerung in Axialrichtung symmetrisch ist.

11. Roboter nach einem der vorangehenden Ansprüchen, wobei die Welle (21) zwischen zwei axial äußeren Gliedelementen (26, 27) einen gleichbleibenden Durchmesser aufweist.

12. Roboter nach einem der vorangehenden Ansprüche, wobei der Roboter eine zweite Viergelenkkette (10, 12) aufweist, deren Kurbel der Schwinge (14, 18) der ersten Viergelenkkette (9, 11) entspricht, und wobei die Verbindung zwischen der Koppel (13, 17) der ersten Viergelenkkette (9, 11), der Kurbel der zweiten Viergelenkkette (10, 12) und der Koppel (15, 19) der zweiten Viergelenkkette (10, 12) in Form der Gelenklagerung ausgestaltet ist.

13. Roboter nach Anspruch 11 oder 12, wobei die Kurbel, Koppel (13, 15, 17, 19) oder Schwinge (14, 16, 18, 20) der ersten oder zweiten Viergelenkkette (9, 10, 11, 12) durch wenigstens ein rotierbar gelagertes Gliedelement (24, 35, 36, 37, 38, 59, 60) der Gelenklagerung gebildet wird.

14. Verfahren zur Montage eines Roboters mit einer ersten Viergelenkkette (9, 11) zum Antrieb wenigstens eines Roboterarms (3, 4), wobei die erste Viergelenkkette (9, 11) eine Kurbel, eine Koppel (13, 17) und eine Schwinge (14, 18) aufweist, wobei die Kurbel mit der Koppel (13, 17) und die Koppel (13, 17) mit der Schwinge (14, 18) jeweils über eine Gelenklagerung verbunden sind, wobei wenigstens eine dieser Gelenklagerungen umfassend die folgenden Schritte montiert wird:
Bereitstellen einer Welle (21),
Aufschieben von Axiallagern (22, 23, 43, 44, 45, 46, 54, 55, 63, 64, 69), wenigstens einem rotierbar gelagerten Gliedelement (24, 35, 36, 37, 38, 59, 60) der Viergelenkkette (9, 11) und einem elastisch komprimierbaren Vorspannelement (33, 49, 52, 53, 56, 57, 65, 66) auf die Welle (21), und
Befestigen eines axialen Anschlags an der Welle (21), sodass der axiale Bereich in dem die Axiallager (22, 23, 43, 44, 45, 46, 54, 55, 63, 64, 69), das rotierbar gelagerte Gliedelement (24, 35, 36, 37, 38, 59, 60) und das elastisch komprimierbare Vorspannelement (33, 49, 52, 53, 56, 57, 65, 66) frei verschieblich vorgesehen sind, auf eine vorbestimmte, unverstellbare Länge begrenzt wird.

## Claims

1. A robot, compromising:
a first four-bar linkage (9, 11) to drive at least one robot arm (3, 4), wherein the first four-bar linkage (9, 11) includes a crank, a coupling (13, 17) and a swing arm (14, 18), wherein the crank is connected to the coupling (13, 17) and the coupling (13, 17) is connected to the swing arm (14, 18) each via a joint bearing, wherein at least one of these joint bearings comprises:
a shaft (21), and
at least one link element (24, 35, 36, 37, 38, 59, 60) rotatably mounted on the shaft (21) between two axial bearings (22, 23, 43, 44, 45, 46, 54, 55, 63, 64, 69),
wherein a resiliently compressible pretensioning element (33, 49, 52, 53, 56, 57, 65, 66) is provided for applying an axial pretensioning force to the axial bearings.

2. The robot according to claim 1, wherein non-adjustable stops are provided on each axial end of the shaft (21) in axial direction.

3. The robot according to claim 2, wherein at least one of the axial bearings (22, 23, 43, 44, 45, 46, 54, 55, 63, 64, 69) abuts axially against one of the stops, on a spacer sleeve (47, 48, 58, 67, 68) and/or on the pretensioning element (33, 49, 52, 53, 56, 57, 65, 66).

4. The robot according to claims 2 and 3, wherein at least one of the stops is formed by an axial outer link element (26, 27) attached to the shaft or a shoulder in the shaft (21).

5. The robot according to one of the preceding claims, wherein the pretensioning element (33, 49, 52, 53, 56, 57, 65, 66) is a helical compression spring, a disk screw, a finger spring washer, an elastic O-ring, in particular a sealing ring, an elastomer ring, a locking plate or a spring washer.

6. The robot according to one of the preceding claims, wherein at least one spacer sleeve (47, 48, 58, 67, 68) is arranged axially next to the pretensioning element (33, 49, 52, 53, 56, 57, 65, 66) on the shaft (21).

7. The robot according to one of the preceding claims, wherein several rotatably mounted link elements (35, 36, 37, 38, 59, 60) are provided on the shaft (21).

8. The robot according to one of the preceding claims, wherein the shaft (21) comprises a shoulder (28, 29) at at least one axial end, against which an outer link element (26, 27) is fixed, so that the outer link element (26, 27) is connected to the shaft (21) in a predefined, non-adjustable position.

9. The robot according to claim 8, wherein the shaft (21) comprises an inner shaft (50) and a hollow shaft (51), disposed about the inner shaft (50), wherein the step (28, 29) is formed by the front side of the hollow shaft (51).

10. The robot according to one of the preceding claims, wherein the joint bearing is symmetrical in an axial direction.

11. The robot according to one of the proceeding claims, wherein the shaft (21) has a constant diameter between two axial outer link elements (26, 27).

12. The robot according to one of the proceeding claims, wherein the robot has a second four-bar linkage (10, 12), whose crank is the swing arm (14, 18) of the first four-bar linkage (9, 11), and wherein the connection of the coupling (13, 17) of the first four-bar linkage (9, 11), the crank of the second four-bar linkage (10, 12) and the coupling (15, 19) of the second four-bar linkage (10, 12) is designed in the form of the joint bearing.

13. The robot according to claims 11 and 12, wherein the crank, the coupling (13, 15, 17, 19) or the swing arm (14, 16, 18, 20) of the first or second four-bar linkage (9, 10, 11, 12) is formed by at least one rotatably mounted link element (24, 35, 36, 37, 38, 59, 60) of the joint bearing.

14. A method for assembling a robot with a first four-bar linkage (9, 11) for driving at least one robot arm (3, 4), wherein the first four-bar linkage (9, 11) has a crank, a coupling (13, 17) and a swing arm (14, 18), wherein the crank is connected to the coupling (13, 17) and the coupling (13, 17) to the swing arm (14, 18) each via a joint bearing, wherein at least one of these joint bearings is assembled comprising the following steps:
providing a shaft (21),
mounting of axial bearings (22, 23, 43, 44, 45, 46, 54, 55, 63, 64, 69), at least one pivotally mounted link element (24, 35, 36, 37, 38, 59, 60) of the four-bar linkage (9, 11) and a resiliently compressible pretensioning element (33, 49, 52, 53, 56, 57, 65, 66) onto the shaft (21), and
attaching an axial stop on the shaft (21), such that the axial area in which the axial bearings (22, 23, 43, 44, 45, 46, 54, 55, 63, 64, 69), the rotatably mounted link element (24, 35, 36, 37, 38, 59, 60) and the resiliently compressible pretensioning element (33, 49, 52, 53, 56, 57, 65, 66) are freely moveable is limited to a predefined, non-adjustable length.

## Revendications

1. Robot, comprenant une première chaîne cinématique à quatre joints articulés (9, 11) permettant d'entraîner au moins un bras de robot (3, 4), dans lequel la première chaîne cinématique à quatre joints articulés (9, 11) présente une manivelle, une bielle (13, 17) et une bielle oscillante (14, 18), dans lequel la manivelle est reliée à la bielle (13, 17) et la bielle (13, 17) est reliée à la bielle oscillante (14, 18) respectivement par un dispositif d'articulation sur paliers, dans lequel au moins un desdits dispositifs d'articulation sur paliers comprend :
un arbre (21), et
au moins un élément articulé (24, 35, 36, 37, 38, 59, 60) monté rotatif sur l'arbre (21) entre deux paliers axiaux (22, 23, 43, 44, 45, 46, 54, 55, 63, 64, 69),
dans lequel un élément de précontrainte (33, 49, 52, 53, 56, 57, 65, 66) élastiquement compressible appliquant une force axiale de précontrainte sur les paliers axiaux est fourni.

2. Robot selon la revendication 1, dans lequel des butées non réglables dans la direction axiale sont fournies au niveau de chaque extrémité axiale de l'arbre (21).

3. Robot selon la revendication 2, dans lequel au moins un des paliers axiaux (22, 23, 43, 44, 45, 46, 54, 55, 63, 64, 69) s'appuie axialement sur l'une des butées, sur une douille d'écartement (47, 48, 58, 67, 68) et/ou sur l'élément de précontrainte (33, 49, 52, 53, 56, 57, 65, 66).

4. Robot selon la revendication 2 ou 3, dans lequel au moins une des butées est formée par un élément articulé (26, 27) axialement extérieur fixé à l'arbre ou par un épaulement de l'arbre (21).

5. Robot selon l'une quelconque des revendications précédentes, dans lequel l'élément de précontrainte (33, 49, 52, 53, 56, 57, 65, 66) est un ressort de compression hélicoïdal, un ressort à disque, une rondelle ressort à doigts, un joint torique élastique, en particulier une bague d'étanchéité, une bague en élastomère, une rondelle frein ou une rondelle ressort.

6. Robot selon l'une quelconque des revendications précédentes, dans lequel au moins une douille d'écartement (47, 48, 58, 67, 68) est agencée sur l'arbre (21) axialement à côté de l'élément de précontrainte (33, 49, 52, 53, 56, 57, 65, 66).

7. Robot selon l'une quelconque des revendications précédentes, dans lequel plusieurs éléments articulés (35, 36, 37, 38, 59, 60) montés rotatifs sont fournis sur l'arbre (21).

8. Robot selon l'une quelconque des revendications précédentes, dans lequel l'arbre (21) présente, au niveau d'au moins une extrémité axiale, une marche (28, 29) contre laquelle est immobilisé un élément articulé (26, 27) extérieur, de sorte que l'élément articulé (26, 27) axialement extérieur est relié à l'arbre (21) dans une position axiale non réglable prédéfinie.

9. Robot selon la revendication 8, dans lequel l'arbre (21) comprend un arbre intérieur (50) et un arbre creux (51) enfilé sur l'arbre intérieur (50), dans lequel la marche (28, 29) est formée par le côté frontal de l'arbre creux (51).

10. Robot selon l'une quelconque des revendications précédentes, dans lequel le dispositif d'articulation sur paliers est symétrique dans la direction axiale.

11. Robot selon l'une quelconque des revendications précédentes, dans lequel l'arbre (21) présente un diamètre constant entre deux éléments articulés (26, 27) axialement extérieurs.

12. Robot selon l'une quelconque des revendications précédentes, dans lequel le robot présente une seconde chaîne cinématique à quatre joints articulés (10, 12) dont la manivelle correspond à la bielle oscillante (14, 18) de la première chaîne cinématique à quatre joints articulés (9, 11), et dans lequel la liaison entre la bielle (13, 17) de la première chaîne cinématique à quatre joints articulés (9, 11), la manivelle de la seconde chaîne cinématique à quatre joints articulés (10, 12) et la bielle (15, 19) de la seconde chaîne cinématique à quatre joints articulés (10, 12) est conçue sous la forme d'un dispositif d'articulation sur paliers.

13. Robot selon la revendication 11 ou 12, dans lequel la manivelle, la bielle (13, 15, 17, 19) ou la bielle oscillante (14, 16, 18, 20) de la première ou de la seconde chaîne cinématique à quatre joints articulés (9, 10, 11, 12) est formée par au moins un élément articulé (24, 35, 36, 37, 38, 59, 60) monté rotatif du dispositif d'articulation sur paliers.

14. Procédé de montage d'un robot comprenant une première chaîne cinématique à quatre joints articulés (9, 11) permettant d'entraîner au moins un bras de robot (3, 4), dans lequel la première chaîne cinématique à quatre joints articulés (9, 11) présente une manivelle, une bielle (13, 17) et une bielle oscillante (14, 18), dans lequel la manivelle est reliée à la bielle (13, 17) et la bielle (13, 17) est reliée à la bielle oscillante (14, 18) respectivement par un dispositif d'articulation sur paliers, dans lequel le montage d'au moins un desdits dispositifs d'articulation sur paliers comprend les étapes ci-dessous consistant à :
fournir un arbre (21),
enfiler sur l'arbre (21) des paliers axiaux (22, 23, 43, 44, 45, 46, 54, 55, 63, 64, 69), au moins un élément articulé (24, 35, 36, 37, 38, 59, 60) monté rotatif de la chaîne cinématique à quatre joints articulés (9, 11) et un élément de précontrainte (33, 49, 52, 53, 56, 57, 65, 66) élastiquement compressible, et
fixer une butée axiale sur l'arbre (21), de sorte que la région axiale au sein de laquelle il est prévu que les paliers axiaux (22, 23, 43, 44, 45, 46, 54, 55, 63, 64, 69), l'élément articulé (24, 35, 36, 37, 38, 59, 60) monté rotatif et l'élément de précontrainte (33, 49, 52, 53, 56, 57, 65, 66) élastiquement compressible puissent se déplacer librement est limitée à une longueur non réglable prédéfinie.
